Europäisches Patentamt

European Patent Office

Office européen des brevets

(11) Publication number: **0 312 045 B1**

(12) **EUROPEAN PATENT SPECIFICATION**

(45) Date of publication of patent specification: **19.02.92**   (51) Int. Cl.5: **B01D 11/04**, B01D 45/12

(21) Application number: **88117014.6**

(22) Date of filing: **13.10.88**

(54) **Centrifugal extractor.**

(30) Priority: **13.10.87 JP 258086/87**

(43) Date of publication of application:
**19.04.89 Bulletin 89/16**

(45) Publication of the grant of the patent:
**19.02.92 Bulletin 92/08**

(84) Designated Contracting States:
**DE FR GB**

(56) References cited:

**PATENT ABSTRACTS OF JAPAN, vol. 7, no. 22 (C-148)[1167], 28th January 1983; & JP-A-57 180 403 (TOKYO SHIBAURA DENKI K.K.) 06-11-1982**

**PATENT ABSTRACTS OF JAPAN, vol. 7, no. 22 (C-148)[1167], 28th January 1983; & JP-A-57 180 404 (TOKYO SHIBAURA DENKI K.K.) 06-11-1982**

(73) Proprietor: **HITACHI, LTD.**
**6, Kanda Surugadai 4-chome**
**Chiyoda-ku, Tokyo 101(JP)**

(72) Inventor: **Omori, Motoji**
**19-4, Nishinarusawacho-1-chome**
**Hitachi-shi(JP)**
Inventor: **Kawaike, Kazuhiko**
**2920-208, Aza Mukaino**
**Mawatari Katsuta-shi(JP)**
Inventor: **Saito, Masayuki**
**Mito Goruden Haitsu 204 8-13, Jonan-2-chome**
**Mito-shi(JP)**
Inventor: **Shirao, Shuichi**
**Seishinryo A-204, 14-18 Takanedai-1-chome**
**Funabashi-shi(JP)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

## Description

BACKGROUND OF THE INVENTION

The present invention relates to a centrifugal extractor suitable for use in nuclear fuel reprocessing.

The centrifugal extractor for the reprocessing of a nuclear fuel is used to mix an organic solvent with a nitric acid solution in which a used nuclear fuel is dissolved for thereby preparing a mixture and, then, to centrifugally separate and extract therefrom a light liquid part which has a smaller specific gravity and contains uranium and plutonium and a heavy liquid part which has a larger specific gravity and contains fission product.

An example of the prior art centrifugal extractor is disclosed in, for example, Japanese Unexamined Patent Publication No. 57-18402. As shown in Figs. 13 and 14 of the drawings, the prior art centrifugal extractor has a housing 8 having a liquid reservoir 4 at the bottom thereof. A rotor 1 is suspended in the housing 8 and has a shaft 6 extending axially through the rotor. An impeller 7 is secured to the bottom end of the shaft 6 and surrounded by a pump casing 10 to form a centrifugal pump 5. The pump casing 10 is secured to the inner peripheral edge of a central opening in a lower partition 26 which forms a top wall of the liquid reservoir 4. The upper end of the pump casing 10 extends into the interior of the rotor 1 through a central opening 11a in a bottom end wall 11 with an annular gap 19 left between the outer peripheral surface of the pump casing 10 and the inner peripheral edge of the rotor bottom end wall 11. The liquid resevoir 4 is provided with liquid supply ports 2 and 3 through which the nitric acid solution and the organic solvent are fed into the reservoir 4.

When the shaft 6 is rotated, the impeller 7 of the centrifugal pump 5 is rotated to agitate and mix the two kinds of the liquids and sucks the liquids up into the interior of the rotor 1 so that the rotor is filled with a mixture of the liquids. The mixture in the rotor 1 is subjected to a centrifugal force and centrifugally separated into light and heavy liquid parts. The light liquid part is caused to flow over a light liquid gate 13 and through a series of extraction ports 15 into a light liquid outlet 17, while the heavy liquid part flows over a heavy liquid gate 14 and through another series of extraction ports 16 into a heavy liquid outlet 18. Radial partitions 21 are provided in the rotor 1 and secured to the shaft 6 to prevent the occurrence of slippage between the rotor and the mixture therein when the rotor is rotated.

In the prior art centrifugal extractor, however, it would be possible that the annular gap 19 between the pump casing 10 and the bottom end wall 11 of the rotor 1 permits the mixture being pumped by the centrifugal pump 5 to leak out of the rotor 1 into an annular space 20 defined between the rotor 1 and the housing 8. Because the rotor 1 is rotated at a speed as high as from 3000 to 4000 r.p.m., the liquid which has leaked out of the rotor 1 into the annular space 20 is altered to mist as the liquid contacts the outer peripheral surface of the rotating rotor 1. The mist flows upwardly through gaps between the outer peripheral surface of the rotor 1 and the inner peripheral edges of the light and heavy liquid outlets 17 and 18 into the liquid parts being discharged from the rotor 1 through the extraction ports 15 and 16 into the liquid outlets 17 and 18, with the result that the mist not only lowers the concentrations of the liquid parts extracted from the rotor 1 but also increases the radiation deterioration of the organic solvent collected as the light liquid part.

It is therefore an object of the present invention to provide a centrifugal extractor which is constructed to prevent leakage of mixture from the rotor into the space between the rotor and the outer housing.

SUMMARY OF THE INVENTION

The centrifugal extractor according to the present invention comprises an outer housing provided at its bottom end with a liquid reservoir for receiving kinds of liquids to be treated, a hollow rotor rotatably mounted in the housing, pump means having an impeller disposed at the bottom end of the rotor and rotatable therewith to feed the liquids from the reservoir into the rotor, the liquids in the rotor being subjected to a centrifugal force and centrifugally separated into a plurality of liquid parts, and means for separately discharging the thus separated liquid parts out of the rotor. The impeller of the pump means is surrounded by a cylindrical hollow member which is connected to an inner peripheral edge of a central opening in the bottom end wall of the rotor in liquid-tight manner and communicates the interior of the rotor with the liquid reservoir.

According to the above feature of the invention, because the cylindrical hollow member which surrounds the pump impeller is connected sealingly to the inner peripheral edge of the central opening in the bottom end wall of the rotor, the cylindrical member is operative to advantageously prevent the occurrence of leakage of the liquids from the interior of the rotor into a space between the rotor and the outer housing.

In one embodiment of the invention, a partition is provided in a lower part of the rotor to separate the reservoir from that part of the interior of the housing which accommodates the rotor. The cylindrical hollow member extends downwardly from the rotor through a central opening in the patition into the liquid reservoir with a gap of a predetermined dimension left between the outer peripheral surface of the cylindrical member and the inner peripheral edge of the central opening in the partition. The space between the rotor and the outer housing is communicated through the gap with the reservoir, so that gases in the space are sucked downwardly into the reservoir by the pumping means. This provides an advantage that splashes of liquids caused in the reservoir by the pumping operation are prevented from flying into an upper part of the space.

The invention will be described by way of example with reference to the accompanying drawings.

BRIEF DESCRIPTION OF THE DRAWINGS

Fig. 1 is an axial sectional view of an embodiment of the centrifugal extractor according to the present invention;
Fig. 2 is a bottom view of a pump taken along line II-II in Fig. 1;
Fig. 3 is a fragmentary axial sectional view of a second embodiment of the centrifugal extractor according to the present invention;
Fig. 4 is a bottom view of a pump taken along line IV-IV in Fig. 3;
Fig. 5 is a fragmentary axial sectional view of a third embodiment of the centrifugal extractor according to the present invention;
Fig. 6 is a bottom view of a pump taken along line VI-VI in Fig. 5;
Fig. 7 is a fragmentary axial sectional view of a fourth embodiment of the centrifugal extractor according to the present invention;
Fig. 8 is a bottom view of a pump taken along line VIII-VIII in Fig. 7;
Fig. 9 is a fragmentary axial sectional view of a modification to the first embodiment of the invention;
Fig. 10 is a bottom view of a pump and a wave-suppressing plate taken along line X-X in Fig. 9;
Fig. 11 is a fragmentary axial sectional view of a modification to the third embodiment of the invention;
Fig. 12 is a bottom view of a pump and a wave-suppressing plate taken along line XII-XII in Fig. 11;
Fig. 13 is similar to Fig. 1 but illustrates the prior art centrifugal extractor; and
Fig. 14 is a bottom view of a pump taken along line XIV-XIV in Fig. 13.

DESCRIPTION OF PREFERRED EMBODIMENTS

Embodiments of the invention will be described hereinunder with reference to the drawings wherein the parts or members of the embodiments the same or similar to those of the prior art centrifugal extractor are designated by the same reference numerals.

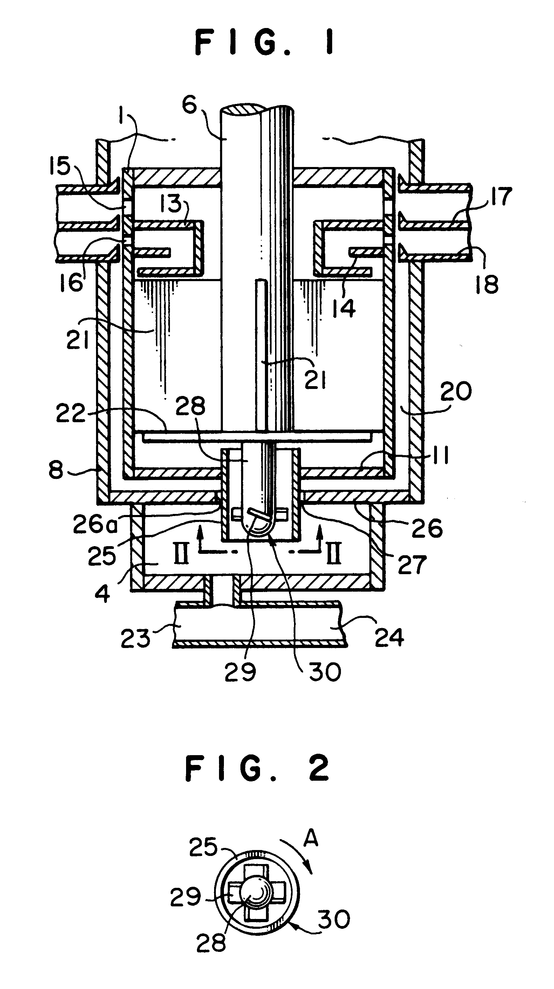

Referring first to Figs. 1 and 2 of the drawings, the first embodiment of the centrifugal extractor of the present invention includes a cylindrical hollow rotor 1 having a shaft 6 extending axially therethrough and secured to the rotor for rotation therewith. Radial partition plates 21 are disposed in the rotor 1 and have radially outer and inner edges respectively secured to the inner peripheral surface of the rotor 1 and to the outer peripheral surface of the shaft 6 so that, when the rotor 1 is rotated with the shaft 6, the partition plates 21 are also rotated to cause a mixture of liquids in the rotor to be also rotated with the rotor without slippage. A baffle plate 22 is secured to the bottom end of the shaft 6 and to the bottom edges of the partition plates 21 to deflect the flow of the mixture caused by a pump to be described later.

The rotor 1 is disposed substantially coaxially in a cylindrical outer housing 8 so that an annular space 20 is left therebetween. A liquid reservoir 4 is provided at the bottom end of the housing 8 and separated by a horizontal partition 26 from the section of the housing in which the rotor 1 is received. The reservoir 4 has a bottom wall having a liquid inlet which is connected to a pair of liquid supply pipes 23 and 24.

The rotor 1 has a bottom end wall 11. An open-topped and open-bottomed hollow cylindrical member 25 is secured by welding to the inner peripheral edge of a central opening formed in the bottom end wall 11 of the rotor and extends coaxially with the shaft 6. The cylindrical member 25 may alternatively be formed integrally with the rotor bottom end wall 11. The cylindrical member 25 has an upper end upwardly extending into the rotor 1 and a lower end downwardly extending into the reservoir 4 through a central opening 26a formed in the partition 26. An annular gap 27 of a predetermined dimension is defined between the outer peripheral surface of the cylindrical member 25 and the inner peripheral edge of the central opening 26a in the partition 26.

An axial flow pump 30 is disposed in the cylindrical member 25 coaxially thereof and comprises a pump shaft 28 fixed to the bottom end of the shaft 6 and rotatable therewith and a plurality of vanes 29 secured to the outer peripheral surface of the pump shaft 28 each at an angle to a plane perpendicular to the axis of the pump shaft 28.

In the upper part of the interior of the rotor 1, there are provided light and heavy liquid gates 13 and 14 both secured to the inner peripheral surface of the rotor 1. The heavy liquid gate 14 is of an annular plannar shape having an inner diameter greater than that of the light liquid gate 13 which has an inner peripheral edge closer to the rotor shaft 6 than that of the heavy liquid gate 14 and which has such a shape as to surround the latter. Extraction ports 15 and 16 are formed in the peripheral wall of the rotor 1 to discharge therefrom light and heavy liquid parts which have been centrifugally separated in the rotor. Liquid outlets 17 and 18 are formed in the peripheral wall of the outer housing 8 in opposed relationship to the extraction ports 15 and 16 to receive and convey the light and heavy liquid parts discharged through the extraction ports 15 and 16.

The operation of the centrifugal extractor described above will be described hereunder. When the rotor 1 is rotated in a direction indicated by an arrow A shown in Fig. 2 and at a predetermined high speed ranging from, for example, 3,000 to 4,000 r.p.m., a solution of nitric acid and an organic solvent respectively supplied through the feed ports 23 and 24 into the liquid reservoir 4 sucked by the operation of the axial flow pump 30 and fed through the cylindrical member 25 into the rotor 1 while the two kinds of the liquids are agitated and mixed by the rotary motion of the vanes 29 of the pump 30. The two kinds of liquids fed into the rotor 1, therefore, form a mixture.

The high speed rotation of the rotor 1 subjects the mixture therein to a centrifugal force by which the mixture is separated into light and heavy liquid parts. The light liquid part is caused to flow over the light liquid gate 13 and through the light liquid extraction ports 15 into the light liquid outlet 17, while the heavy liquid part flows over the heavy liquid gate 14 and through the heavy liquid extraction port 16 into the heavy liquid outlet 18.

It will be appreciated that a predetermined pressure is applied to the mixture fed into the rotor 1 due to the pumping operation of the axial flow pump 30. However, because the cylindrical member 25 is connected to the bottom end wall 11 of the rotor 1 in liquid-tight manner, the mixture in the rotor 1 is prevented from leaking therefrom into the annular space 20. The annular gap 27 left between the cylindrical member 25 and the partition 26 communicates the annular space 20 with the reservoir 4. Thus, the air or gases in the annular space 20 are sucked by the pump 30 into the reservoir 4, with an advantageous result that vapors of the nitric acid solution and the organic solvent produced in the reservoir 4 are prevented from entering the annular space 20 through the annular gap 27.

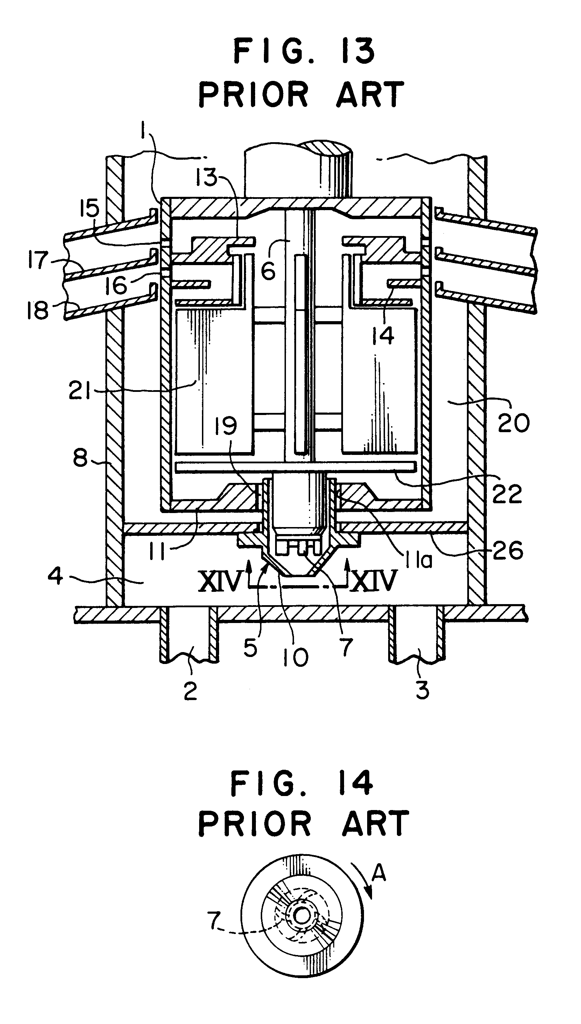

The described embodiment of the invention provides a further advantage that the rotor 1, the shaft 6 and the axial flow pump 30 can be easily removed, by one step, upwardly as a single unit from the outer housing 8 through an opening in the top of the housing. This easy removal is owing to the fact that the rotor 1 and the cylindrical member 25 are radially inwardly spaced respectively from the outer housing 8 and the inner peripheral edge of the central opening 26a in the partition 26 and, therefore, the upward movement of the rotor 1 and the pump 30 are not interfered. Accordingly, the described embodiment of the invention assures an easy maintenance as in the prior art described with reference to Figs. 13 and 14.

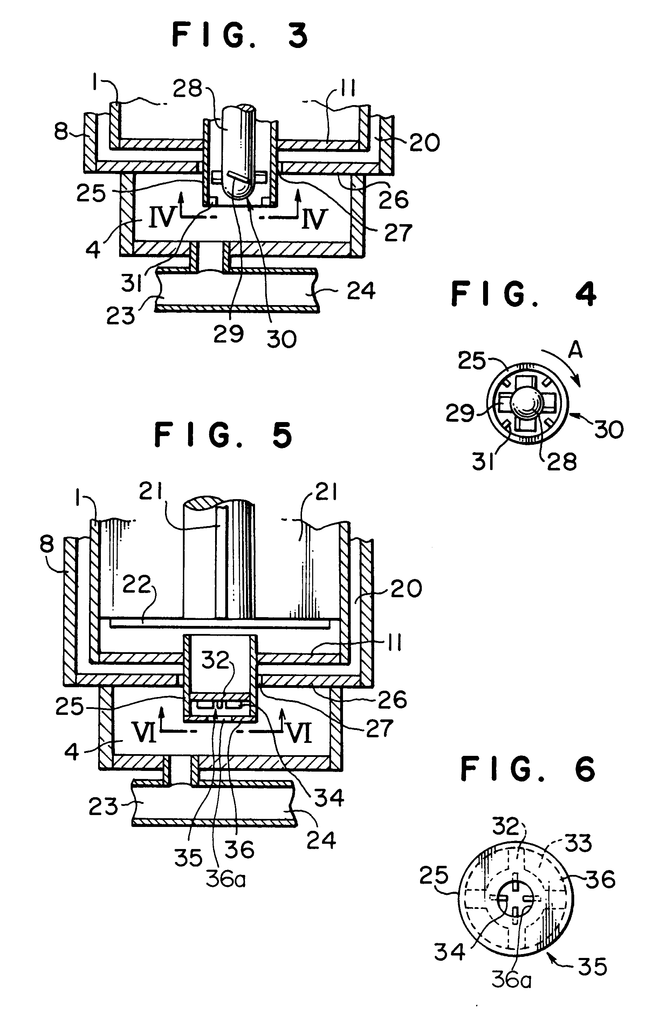

Figs. 3 and 4 show a second embodiment of the invention. This embodiment is distinguished from the first embodiment in that agitating vanes 31 are provided along the inner peripheral edge of the lower end of the cylindrical member 25. Thus, when the rotor 1 is rotated, the agitating vanes 31 are also rotated together with the cylindrical member 25 to agitate and mix the nitric acid solution and the organic solvent in the liquid reservoir 4 before the liquids are pumped by the axial flow pump 30 into the rotor 1.

According to the second embodiment of the invention, the agitating vanes 31 are operative to add the agitating and mixing function to that of the pumping vanes 29 of the axial flow pump 30. The agitating and mixing operation of the agitating vanes 31 occurs within the cylindrical member 25 and, therefore, will not splash the nitric acid solution and the organic solvent through the annular gap 27 into the annular space 20.

Figs. 5 and 6 show a third embodiment of the invention. This embodiment is distinguished from the first embodiment in that the axial flow pump 30 of the first embodiment is replaced by a centrifugal pump 35 which comprises a spider 32 disposed in and secured to the inner peripheral surface of the cylindrical member 25 to cooperate therewith to define a plurality of fluid passages 33, a plurality of radial vanes 34 each having a rectangular shape and secured to the underside of a hub section of the spider 32, and a restriction disc 36 secured to the bottom end of the cylindrical member 25 and having a central restriction opening 36a of a diameter much smaller than that of the inner periphery of the cylindrical member 25. When the rotor 1 is rotated, the spider 32 and the radial vanes 34 are rotated together with the cylindrical member 25 to suck the nitric acid solution and the organic solvent from the liquid reservoir 4 through the restriction opening 36a and feed the liquids through the passages 33 up into the rotor 1 while the two kinds of the liquids are agitated and mixed when sucked by the pump.

This embodiment of the invention is advantageous in that, because the spider 32 is fixed to the inner peripheral surface of the cylindrical member 25, there is little difficulty in establishing, in the process of manufacture, the concentricity of the cylindrical member 25 to the pump impeller. Thus, the extractor of this embodiment can be made more easily than the extractors of the preceding embodiments. It is needless to say that, in the extractor of this embodiment, the nitric acid solution and the organic solvent both in the reservoir 4 are not splashed through the gap 27 into the annular space 20.

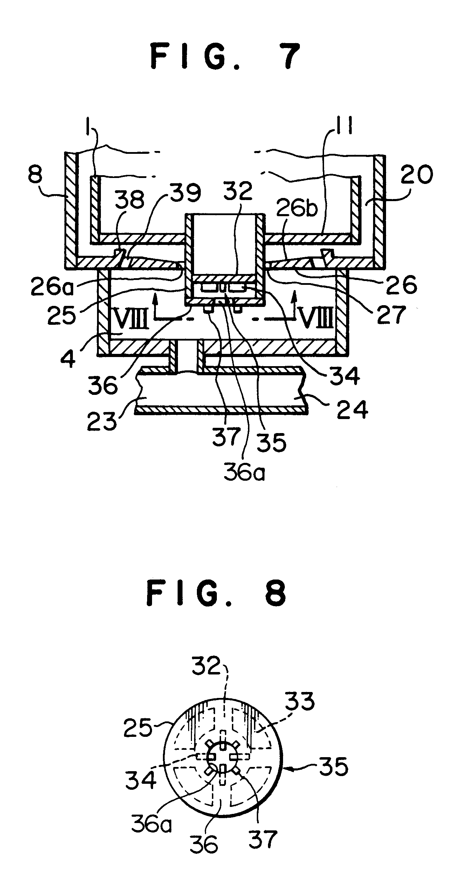

Figs. 7 and 8 show a fourth embodiment of the invention. This embodiment is distinguished from the third embodiment in that a plurality of agitating vanes 37 are mounted on the underside of the restriction disc 36 around the restriction opening 36a, in that the partition 26 is provided on its upper face with an annular projection 38 and in that the partition 26 is formed therein with a plurality of communication apertures 39 disposed radially inwardly of the annular projection 38. In addition, the upper surface of the partition 26 is radially inwardly and downwardly inclined as at 26b from the communication apertures 39 to the inner peripheral edge of the central opening 26a. When the rotor 1 is rotated, the centrifugal pump 35 is rotated with the cylindrical member 25 and with the agitating vanes 37. The rotation of the vanes 37 is effective to agitate and mix the nitric acid solution and the organic solvent and, therefore, adds the agitating and mixing function to that of the centrifugal pump 35.

Because the agitating vanes 37 are disposed outside the cylindrical member 25, there is a possibility that, if the agitating and mixing function of the agitating vanes 37 is violent, a part of the splash of the nitric acid solution and the organic solvent would fly through the gap 27 into the space between the bottom end wall 11 of the rotor 1 and the partition 26. Such part of the splash, however, is stopped or trapped by the annular projection 38 and, thus, prevented from going further into an upper part of the annular space 20 between the rotor 1 and the outer housing 1. The liquid of this trapped part of the splash, therefore, is returned partly through the communication apertures 39 and partly along the radially inwardly and downwardly inclined surface portion 26b of the partition 26.

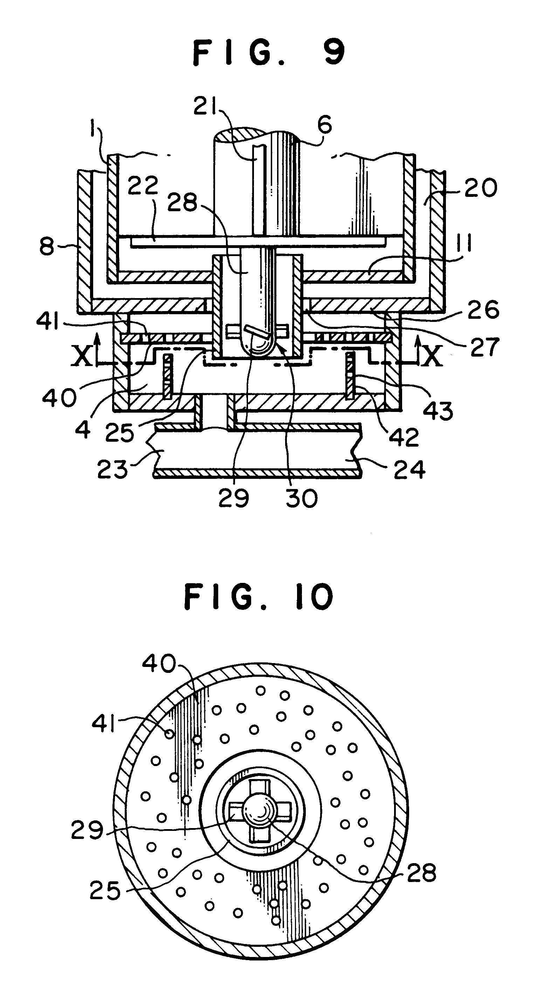

Figs. 9 and 10 show a modification to the first embodiment described with reference to Figs. 1 and 2. This modification is improved over the first embodiment in that an annular horizontal plate 40 and a cylindrical member or ring 42 are disposed in the liquid reservoir 4 concentrically with the cylindrical member 25 for suppressing the formation of waves in the reservoir 4. The wave-suppressing plate 40 and the wave-suppressing ring 42 are formed therein with a large number of small apertures 41 and 43. Thus, when the liquids flow in the reservoir 4, these small apertures 41 and 43 impede the flows of the liquids to advantageously eliminate the occurrence or formation of waves which would otherwise be caused by the agitating, mixing and pumping function of the axial flow pump 30. Accordingly, the wave-suppressing plate 40 and the wave-suppressing ring 42 are operative to prevent the liquids from being splashed into the annular space 20 between the rotor 1 and the outer housing 8.

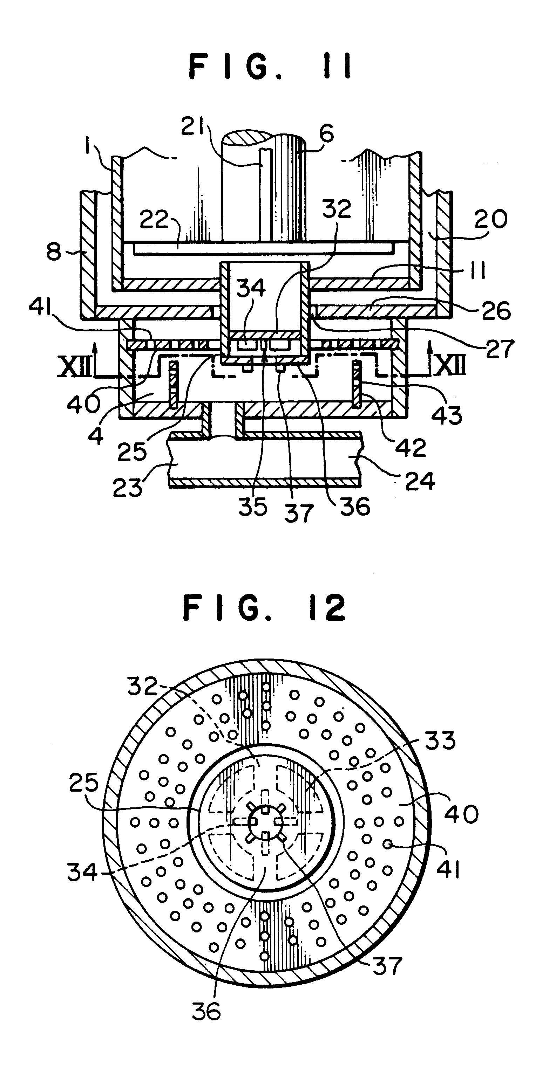

Figs. 11 and 12 show a further embodiment of the invention in which the centrifugal pump 35 shown in Figs. 7 and 8 and the wave-suppressing plate and ring 40 and 42 are incorporated. As compared with the embodiment in which the axial flow pump 30 is employed, this embodiment has a greater tendency that waves are caused in the liquid reservoir 4 because the agitating vanes 37 are mounted on the underside of the restriction disc 36 of the centrifugal pump 35. This tendency, however, is advantageously eliminated by the wave-suppressing plate 40 and the wave-suppressing ring 42.

**Claims**

1. A centrifugal extractor comprising an outer cylindrical housing (8) provided at its bottom end with a liquid reservoir (4) for receiving kinds of liquids to be treated, a hollow cylindrical rotor (1) rotatably mounted coaxially in the housing, pump means (30; 35) having an impeller disposed at the bottom end of the rotor shaft (6) so that it projects into the reservoir and rotatable therewith to feed the liquids from the reservoir into the rotor, the liquids in the rotor being subjected to a centrifugal force and centrifugally separated into a plurality of liquid parts, and means (15, 16, 17, 18) for separately discharging the thus separated liquid parts out of the rotor and housing, characterised in that said impeller of the pump means is surrounded by a cylindrical hollow member (25) which is connected to an inner peripheral edge of a central opening in the bottom end wall (11) of the rotor in liquid-tight manner and is the sole communication between the interior of said rotor (1) and the liquid reservoir (4).

2. A centrifugal extractor according to Claim 1, characterised in that a partition (26) is provided in the bottom of said housing (8) to separate said liquid reservoir from a section of said housing in which said rotor is disposed, said partition is formed therein with a central opening (26a) through which said cylindrical member (25) extends from said rotor (1) into said liquid reservoir (4) with a gap (27) of a predetermined dimension left between the inner peripheral edge of said central opening (26a) and the outer peripheral surface of said cylindrical member (25).

3. A centrifugal extractor according to Claim 1 or 2, characterised in that said pump means comprises a pump shaft (28) connected to the bottom end of said rotor shaft (6) and a plurality of vanes (29) secured to said pump shaft.

4. A centrifugal extractor according to any one of Claims 1 to 3, characterised in that a plurality of agitating vanes (31) are secured to the inner peripheral surface of said cylindrical member (25).

5. A centrifugal extractor according to Claim 1 or 2, characterised in that said pump means comprises a spider (32) secured to the inner peripheral surface of said cylindrical member (25) and cooperating therewith to define communication passages (33), a plurality of vanes (34) secured to said spider and a member (36) for restricting the area of the opening in the bottom end of said cylindrical member (25).

6. A centrifugal extractor according to Claim 5, characterised in that said restricting member (36) comprises a restricting disc having a central opening (36a) and a plurality of agitating vanes (37) are secured to the underside of said restricting disc around said central opening.

7. A centrifugal extractor according to any one of Claims 2 to 6, characterised in that an annular projection (38) is provided on the upper surface of said partition (26) around said central opening (26a) therein and said partition is formed therein with communication apertures (39) disposed radially inwardly of said annular projection (38).

8. A centrifugal extractor according to Claim 7, characterised in that the upper surface of said partition (26) is downwardly inclined from said communication apertures (39) to said central opening (26a) in said partition.

9. A centrifugal extractor according to any one of Claims 1 to 5, characterised in that a circular wave-suppressing means (40, 42) having a large number of apertures (41, 43) formed therein is disposed in said reservoir (4) in concentric relationship to said cylindrical member (25).

**Revendications**

1. Extracteur centrifuge comportant un carter extérieur cylindrique (8) équipé, à son extrémité inférieure, d'un réservoir de liquides (4) servant à recevoir des types de liquides devant être traités, un rotor coaxial cylindrique creux (1) monté rotatif dans le carter, des moyens formant pompe (30;35) possédant un rotor disposé à l'extrémité inférieure de l'arbre (6) du rotor de manière à pénétrer dans le réservoir et aptes à tourner conjointement avec le rotor pour envoyer les liquides depuis le réservoir dans le rotor, les liquides présents dans le rotor étant soumis à une force centrifuge et étant séparés, par effet centrifuge, en une pluralité de parties liquides, et des moyens (15,16,17,18) pour évacuer séparément les parties liquides ainsi séparées, hors du rotor et du carter, caractérisé en ce que ledit rotor des moyens formant pompe est entouré par un élément cylindrique creux (25) qui est raccordé à un bord périphérique intérieur d'une ouverture centrale ménagée dans la paroi d'extrémité inférieure (11) du rotor, d'une manière étanche aux liquides, et est la seule communication entre l'intérieur dudit rotor (1) et le réservoir de liquides (4).

2. Extracteur centrifuge selon la revendication 1, caractérisé en ce qu'une cloison (26) est prévue dans le fond dudit carter (8) pour séparer ledit réservoir de liquides d'une section dudit carter, dans laquelle ledit rotor est disposé, ladite cloison comporte une ouverture centrale (26a), par laquelle ledit élément cylindrique (25) s'étend depuis ledit rotor (1) dans ledit réservoir de liquides (4), un intervalle (27) possédant une dimension prédéterminée subsistant entre le bord périphérique intérieur de ladite ouverture centrale (26a) et la surface périphérique extérieure dudit élément cylindrique (25).

3. Extracteur centrifuge selon la revendication 1 ou 2, caractérisé en ce que lesdits moyens formant pompe comprennent un arbre de pompe (28) raccordé à l'extrémité inférieure dudit arbre (6) du rotor et une pluralité de palettes (29) fixées audit arbre de la pompe.

4. Extracteur centrifuge selon l'une quelconque des revendications 1 à 3, caractérisé en ce qu'une pluralité d'ailettes d'agitation (31) sont fixées à la surface périphérique intérieure dudit élément cylindrique (25).

5. Extracteur centrifuge selon la revendication 1 ou 2, caractérisé en ce que lesdits moyens formant pompe comprennent un croisillon (32) fixé à la surface périphérique intérieure dudit élément cylindrique (25) et qui coopère avec ce dernier pour définir des passages de communication (33), une pluralité d'ailettes (34) fixées audit croisillon et un élément (36) pour limiter la surface de l'ouverture dans l'extrémité inférieure dudit élément cylindrique (25).

6. Extracteur centrifuge selon la revendication 5, caractérisé en ce que ledit élément de limitation (36) comprend un disque de limitation possédant une ouverture centrale (36a), et une pluralité d'ailettes d'agitation (37) sont fixées à la face inférieure dudit disque de limitation autour de ladite ouverture centrale.

7. Extracteur centrifuge selon l'une quelconque des revendications 2 à 6, caractérisé en ce qu'une partie saillante annulaire (38) est prévue sur la surface supérieure de ladite cloison (26) autour de ladite ouverture centrale (26a) ménagée dans cette cloison, et ladite cloison comporte des ouvertures de communication (39) disposées de manière à s'étendre vers l'intérieur, du point de vue radial, par rapport à ladite partie saillante annulaire (38).

8. Extracteur centrifuge selon la revendication 7, caractérisé en ce que la surface supérieure de ladite cloison (26) est inclinée vers le bas à partir desdites ouvertures de communication (39) en direction de ladite ouverture centrale (26a) ménagée dans ladite cloison.

9. Extracteur centrifuge selon l'une quelconque des revendications 1 à 5, caractérisé en ce que des moyens circulaires de suppression de vagues (40,42), dans lesquels sont ménagées un grand nombre d'ouvertures (41,43), sont disposés dans ledit réservoir (4) dans une disposition concentrique par rapport audit élément cylindrique (25).

**Patentansprüche**

1. Zentrifugalextraktor mit einem äußeren zylindrischen Gehäuse (8), das an seinem unteren Ende mit einem Flüssigkeitsreservoir (4) versehen ist, zur Aufnahme von verschiedenen Arten von zu behandelnden Flüssigkeiten, einem hohlen zylindrischen Rotor (1), der drehbar und koaxial im Gehäuse montiert ist, Pumpenmittel (30; 35) mit einem am unteren Ende der Rotorwelle (6) angeordneten Impeller, der in das Reservoir vorsteht und damit drehbar ist, zum Fördern der Flüssigkeiten von dem Reservoir in den Rotor, wobei die Flüssigkeiten in dem Rotor einer Zentrifugalkraft ausgesetzt sind und durch die Zentrifugalkraft in eine Vielzahl von Flüssigkeitsschichten geteilt werden, und Mittel (15, 16, 17, 18) zum getrennten Abführen der getrennten Flüssigkeitsschichten aus dem Rotor und dem Gehäuse,
dadurch gekennzeichnet,
daß der Impeller der Pumpenmittel von einem zylindrischen hohlen Teil (25) umgeben ist, das mit einer inneren Umfangskante einer Zentralöffnung in der unteren Abschlußwand (11) des Rotors flüssigkeitsdicht verbunden ist und die einzigste Verbindung zwischen dem Inneren des Rotors (1) und dem Flüssigkeitsreservoir (4) darstellt.

2. Zentrifugalextraktor nach Anspruch 1, dadurch gekennzeichnet, daß eine Trennwand (26) im Boden des Gehäuses (8) zum Trennen des Flüssigkeitsreservoirs von einem Teil des Gehäuses, in dem der Rotor angeordnet ist, vorgesehen ist, wobei die Trennwand mit einer Zentralöffnung (26a) versehen ist, durch die sich das zylindrische Teil (25) von dem Rotor (1) in das Flüssigkeitsreservoir (4) erstreckt, mit einem Spalt (27) mit einer vorbestimmten Öffnungsweite zwischen der inneren Umfangskante der Zentralöffnung (26a) und der äußeren Umfangsfläche des zylindrischen Teils (25).

3. Zentrifugalextraktor nach Anspruch 1 oder 2, dadurch gekennzeichnet, daß die Pumpenmittel einen Pumpenschaft (28) enthalten, der mit dem unteren Ende der Rotorwelle (6) verbunden ist, und eine Vielzahl von Schaufeln (29) an der Pumpenwelle befestigt sind.

4. Zentrifugalextraktor nach einem der Ansprüche 1-3, dadurch gekennzeichnet, daß mehrere sich bewegende Flügel (31) an die innere Umfangsfläche des zylindrischen Teils (25) befestigt sind.

5. Zentrifugalextraktor nach Anspruch 1 oder 2, dadurch gekennzeichnet, daß die Pumpenmittel enthalten ein Kreuzteil (32), das an die innere Umfangsfläche des zylindrischen Teils (25) befestigt ist und damit über Verbindungskanäle (33) in Verbindung steht, mehrere Flügel (34), die mit dem Kreuzteil verbunden sind und ein Teil (36) zur Beschränkung der Öffnungsfläche im unteren Ende des zylindrischen Teils (25).

6. Zentrifugalextraktor nach Anspruch 5, dadurch gekennzeichzeichnet, daß das Beschränkungsteil (36) eine Beschränkungsscheibe mit einer zentralen Öffnung (36a) und mehreren sich bewegenden Flügeln (37) enthält, die an der Unterseite der Beschränkungsscheibe um die zentrale Öffnung herum befestigt sind.

7. Zentrifugalextraktor nach einem der Ansprüche 2-6, dadurch gekennzeichnet, daß eine ringförmige Vorstehung (38) an der oberen Oberfläche der Trennwand (26) um die darin befindliche zentrale Öffnung (26a) herum vorgesehen ist und in der Trennwand Verbindungsöffnungen (39) gebildet sind, die radial innerhalb der ringförmigen Vorstehung (38) angeordnet sind.

8. Zentrifugalextraktor nach Anspruch 7, dadurch gekennzeichnet, daß die obere Oberfläche der Trennwand (26) von den Verbindungsöffnungen (39) zu der Zentralöffnung (26a) der Trennwand nach unten geneigt ist.

9. Zentrifugalextraktor nach einem der Ansprüche 1-5, dadurch gekennzeichnet, daß kreisförmige Mittel (40, 42) zur Wellenunterdrückung mit einer großen Anzahl von darin gebildeten Öffnungen (41, 43) in dem Reservoir (4) konzentrisch zu dem zylindrischen Teil (25) angeordnet sind.

# F I G.  I

# F I G.  2

# FIG. 3

# FIG. 4

# FIG. 5

# FIG. 6

# F I G.  7

# F I G.  8

# F I G. 9

# F I G. I0

# F I G. II

# F I G. I2

EP 0 312 045 B1

# FIG. 13
# PRIOR ART

# FIG. 14
# PRIOR ART